# EUROPEAN PATENT SPECIFICATION

(11) **EP 3 953 570 B1**
(45) Date of publication and mention of the grant of the patent: **27.12.2023**
(21) Application number: 20742417.7
(22) Date of filing: 08.04.2020
(51) Int. Cl.: F01K 25/06, F01K 25/08, F22B 3/02, F22B 3/04, F01K 5/00, F22B 1/02

(54) **METHOD AND APPARATUS FOR ENERGY STORAGE BASED ON DIFFERENCE IN CONCENTRATION**
VERFAHREN UND VORRICHTUNG ZUR ENERGIESPEICHERUNG BASIEREND AUF KONZENTRATIONSUNTERSCHIEDEN
PROCÉDÉ ET APPAREIL DE STOCKAGE D'ÉNERGIE SUR LA BASE D'UNE DIFFÉRENCE DE CONCENTRATION

(30) Priority: 09.04.2019 HU 1900117
(43) Date of publication of application: 16.02.2022
(73) Proprietor: Wigner Fizikai Kutatóközpont, 1121 Budapest (HU)
(72) Inventor: NÉMETH, Zoltán, 1172 Budapest (HU)
(74) Representative: Krajnyák, András
(86) International application number: PCT/HU2020/050012
(87) International publication number: WO 2020/208384

(56) References cited:
- FR-A1- 3 016 919
- US-A- 4 617 800
- US-A1- 2010 183 903

## Description

The invention relates to a method according to the preamble of claim 1 for the extraction of energy existing in the form of concentration gradients and for the storage of energy in the form of concentration gradients, and on the second part an apparatus to implement the method. The invention can be used in all fields, where electric or mechanical energy should be stored for later use, but especially for leveling out the production and consumption differences on electrical power grids.

As renewable energy sources gain ground mass energy storage become more and more important, since electric energy production and consumption peaks appear at different times. Thus at the time of peak consumption there is an energy deficiency, while at the time of production peak there is a surplus of energy, which is at present managed by peaking power plants, which can be started and stopped rapidly (e.g. gas turbines), but the operation of such peaking plants is expensive. In the absence of a sufficient energy storage solution, the proportion of peaking power plants should be increased together with the proportion of renewable sources, which is expensive, environment polluting and difficult to achieve. This problem is currently the biggest obstacle in the path of renewable energy.

Realizing the demand several solutions were devised for mass energy storage, but these cannot spread due to various shortcomings: either their energy density is too low, or their life cycle cost is too high.

A summary of known technologies used or developed for mass energy storage can be found at the link below:
http://ease-storage.eu/energy-storage/technologies/

A copy of the above page can also be found at the following address of the Internet Archive Wayback Machine service:
https://web.archive.org/web/20180817024958/http://ease-storage.eu/energy-storage/technologies/

The most widespread method for mass energy storage is the "pumped water" or "pumped hydro storage" (PHS), in which during periods of low demand and high availability of electrical energy, the water is pumped and stored in an upper reservoir. One drawback of this technology is that its energy density is very low, about 0.1 kJ/kg. Due to the low energy density the initial investment required is enormous and often negative environmental effects have to be taken into account around the site of installation.

An example to the other extreme is battery storage, e.g., the solution named Powerwall by the company Tesla from USA has an energy density of 230 kJ/kg and a price around 0.13 USD/kJ (450 USD/kWh). Rechargeable batteries are excellent for storing low amounts of energy and in mobile devices, but their application for mass energy storage is limited by their price and relatively low lifetime. A further problem of battery storage is that they use materials, which are difficult to come at and/or cause pollution.

The purpose of this invention is to allow the storage of large amounts of energy cheaply, in relatively compact dimensions in an environment friendly way. We aim at an energy density close to the battery storage, but with longer lifetime; investment cost significantly lower than a peaking power plant of similar capacity, its maintenance (with no pollution whatsoever) should be much cheaper than that of a peaking power plant.

The state of the art knows several methods for energy extraction from concentration gradients, but these did not find widespread use due to various reasons. These solutions are virtually never used for energy storage, probably because the storage application has even higher requirements. Below we briefly describe the principle of energy extraction from concentration gradients, and the problems of the existing solutions, which make them insufficient to reach the aim of the invention. Document US4617800A discloses a prior art method and device to accumulate and extract energy through the effect of different vapour pressure in solutions of different concentration.

Concentration gradients are the basis of devices utilizing osmotic pressure, see e.g., the paper and references available at https://en.wikipedia.org/wiki/Osmotic power. These devices generally use special membranes, the low permeability, short lifetime and/or high price of which restrict their widespread use. An excellent overview of the topic can be found in the work of Jones and Finley, "OCEANS 2003. Proceedings, DOI: 10.1109/OCEANS.2003.178265", which can be accessed at the internet address http://waderllc.com/2284-2287.pdf for example.

The use of semipermeable membranes can be avoided if the solutions of different concentration are only connected through their vapor phases. It is well known that the vapor pressure of a solution varies as a function of the amount of the solute, the vapor pressure over salt solutions is usually much lower than that over the pure solvent. If two containers having the same pressure, one comprising pure solvent and its vapor, the other comprising a solution and its vapor - mainly the vapor of the solvent - are connected through their vapor space, then their vapor pressures equalize and the liquid in the container of pure solvent starts evaporating (boiling) intensely. This process keeps going as long as the pure solvent cools down to a temperature, on which its vapor pressure is equal to that of the solution. The vapor condensates in the other container and dilutes the solution. The process in this form stops quickly due to the growing temperature difference. If, however there is a connection of good thermal conductivity between the two containers through e.g. the wall of a heat exchanger, then the latent heat released by the condensation in one of the containers continuously heats the liquid evaporating in the other container, thus that liquid keeps boiling as long as there is a concentration difference between the two containers. The same principle is behind the vapor compression desalination see B. W. Tleimat: "Paper presented at the American Society of Mechanical Engineers Winter Annual Meeting, Los Angeles, 16-20 November 1969, furthermore Mark Olsson et al. have presented an energy extraction possibility utilizing vapor pressure differences see: Olsson et al.: "Salinity Gradient Power: Utilizing Vapor Pressure Differences, SCIENCE, VOL. 206, 26 OCTOBER 1979", the paper can also be seen at the internet address http://www.sciencemag.org/cgi/content/abstract/206/4417/452. The result were never utilized in industrial scales, because the vapor pressure of aqueous solutions appearing naturally or as industrial wastes differs so minutely from the vapor pressure of water, that the necessary turbine sizes are unattainable. The prototype created by Olsson and his colleagues had an efficiency of 23%, which is acceptable for energy generation, but energy storage is not practical at such low efficiencies and thus has never even been suggested.

A huge advantage of the idea suggested by Olsson et al. is that it does not require special membranes; it uses reliable, long-lived components. It has however three significant problems: due to the very low pressure differences it would require huge turbine diameters in the order of 100, due to the small temperature differences the surface of the heat exchangers should be unpractically large, and the devices realized until now has efficiencies which are too low to be used for energy storage.

The present invention is based on the recognition that if in a thermodynamic cycle the heat extraction is performed by evaporating a dilute solution or pure solvent, then the extracted heat can be recovered at a higher temperature by getting the humid working medium in touch with a solution of higher concentration, for which the vapor pressure of the solvent at the same temperature is lower. Thus, the vapor condensates on the higher concentration solution and the heat extracted during the evaporation of the solvent is returned into the cycle as condensation heat. Thus, the working medium recovers the energy, which it conveyed to the vapor previously plus as much as the condensation heat here is larger than the vaporization heat of the heat extraction process. In such a cycle the energy stored as concentration differences can be extracted with high efficiency, the efficiency has no thermodynamic limit. Driving the cycle in the reverse direction the mechanical work fed into the process can be stored with high efficiency in the concentration difference of the solutions.

Another recognition of the invention is that if instead of the vapor of the solvent another material, suitably an inert gas, is used as working medium, then a much quicker heat exchange and, with respect to the afore mentioned Olsson method, two or three orders of magnitude higher pressure can be attained. Thus, the specific power of the energy conversion device can be much higher, while the size of the heat exchanger can be much lower. The pressure can be increased by increasing the amount and the temperature of the working medium, while the problem of the heat exchanger is solved by the dedicated working medium by performing the heat exchange between the solutions and the working medium, instead between the two solutions. Thus, it is not necessary to use a closed heat exchanger anymore, which can separate the solutions chemically as in the Olsson method, we can use one or more open heat exchanger(s) for the rapid heat exchange between solution and working medium. For example, one solution is injected into the working medium in the as a spray or mist, where it is in touch with the working medium through the huge total surface of the multitude of minute droplets. The heat exchange between the working medium and the other solution is performed in a similar manner, but spatially or temporally separated from the heat exchange with the first solution, which ensures that the solute cannot get into the container comprising the dilute solution - which for our purpose can also be pure solvent, for example pure water, but it can contain solutes in smaller quantities, just like tap water and seawater. The higher pressure and quicker heat exchange significantly improve the efficiency as well, since in this process the efficiency is limited by the losses occurring due to mechanical and viscous drag and in the heat exchanger, instead of a principal thermodynamic limit. The second is minimalized by the much more efficient heat exchange, since as the heat exchange is performed through a much larger surface in the open heat exchanger, almost all heat can be recovered, the heat loss occurring due to the condensation at the walls of the device is negligible for larger machines.

Another recognition of the invention is that a large part of the frictional and mechanical loss can be recovered if the energy conversion devices are cooled by the solutions themselves, which this way convey the recovered heat to the working medium.

The goal is achieved by a method according to claim 1 and an apparatus according to claim 11. Further particularly advantageous implementation methods and advantageous embodiments are presented in the dependent claims.

The method and apparatus according to the invention is presented below in more details with the aid of advantageous examples, with reference to the attached drawing, where
- Figure 1: is the flowchart of an advantageous implementation of the method according to the invention,
- Figure 2: is the pressure-volume diagram of the method described in Figure 1
- Figure 3: shows a pressure-volume diagram for a further advantageous implementation of the method according to the invention,
- Figure 4: shows a block diagram of an advantageous embodiment of the apparatus according to the invention,
- Figure 5: shows a block diagram of a further advantageous embodiment of the apparatus according to the invention.

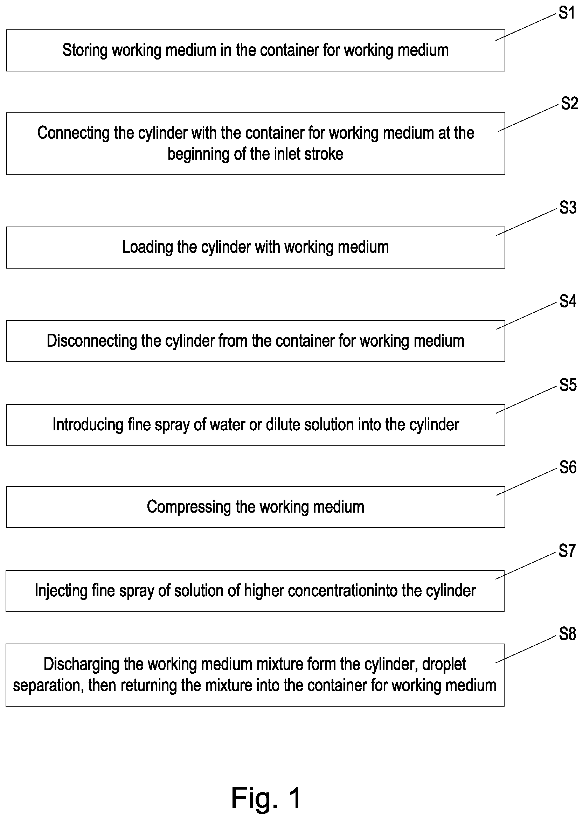

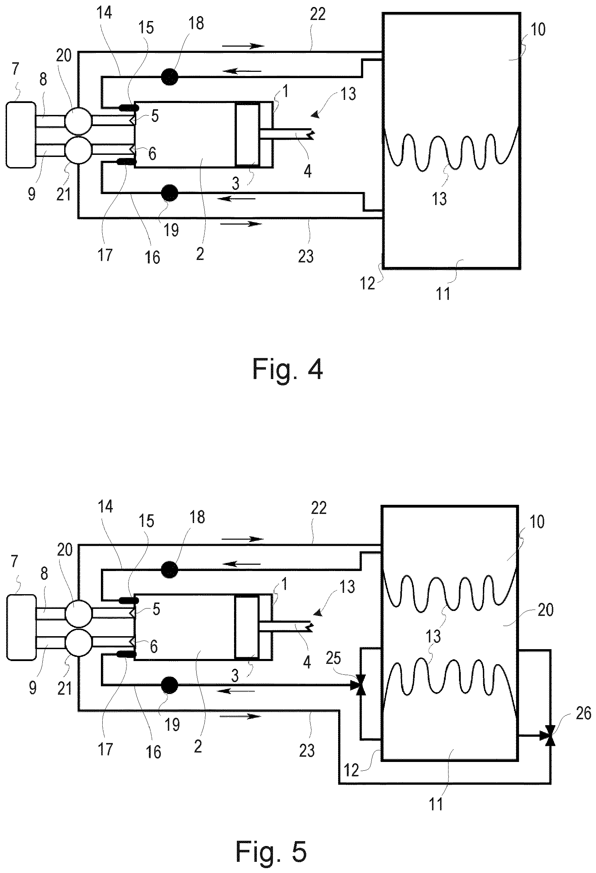

Two possible realizations of the apparatus according to the invention are outlined in Figures 4 and 5 where both embodiments utilize piston heat engines of known structure and operation. The heat engine comprises a cylinder 1, which comprises a working volume 2. In the working volume 2 there is a movable piston 3, a piston rod 4 of which is connected via a drive train with an electric appliance in a way well-known to a person skilled in the art. In case of transforming electric energy to mechanical energy the electric appliance is an engine, in case of transforming mechanical motion into electric energy it is a generator, both functions can be served by an electric appliance, which can function both as engine and generator. In the cylinder 1 there are valves 5, 6 connected to the working volume 2, through these valves 5, 6 and ducts 8, 9 the working volume 2 is connected with a container 7 for working medium. In the present embodiment the apparatus according to the invention comprises separate containers 10, 11, where the container 10 comprises the dilute solution and the container 11 is for the higher concentration solution. Since the sum of the volume of the two solutions is nearly constant - for salt solutions the variation is only a few tenth of a percent - in the advantageous embodiment depicted in Figure 1 the containers 10 and 11 of the two solutions are situated in a single tank 12. The container 10 for the dilute solution is separated from the container 11 for the higher concentration solution by a flexible wall 13 in an impermeable way; with this the volume requirement of the storage of the solutions can be significantly reduced compared to an arrangement utilizing two separate tanks. The container 10 for the dilute solution is joined to an injector 15 built into the cylinder 1 through a duct 14, while the container 11 for the higher concentration solution is joined through a duct 16 to an injector 17 built into the cylinder 1. For the purpose of fluid displacement, a pump 18 is built into the duct 14 and a pump 19 is built into the duct 16. A droplet separator 20 is installed into the duct 8 and a droplet separator 21 is installed into the duct 9. The fluid output of the droplet separator 20 is connected to the container 10 of dilute solution through a duct 22, the fluid output of the droplet separator 21 is connected to the container 11 for the higher concentration solution through a duct 23.

The method according to the invention is described in more details below through an advantageous implementation using Figures 1-3, while example embodiments of the apparatus materializing the method are described using Figures 4 and 5. The scope of the invention is not limited to these examples, the numerical values, such as the work volume minimum and maximum temperatures, pressure and humidity values can be varied in a broad range.

In the example implementation of the method shown in Figure 1, in step S1 inert gas, for example Argon at 6 bar pressure and near room temperature that is at 300 K or 27 °C, as working medium is stored in the container 11 for working medium. We use a piston engine as a heat engine having a cylinder 1 of a volume 1 m³, the compression ratio of the engine is 1:4.48. It is important to note that the method can be realized by reciprocating devices comprising pistons and cylinders and by turbomachinery alike, or rather every known principle for fluid displacement can be utilized, for the sake of simplicity in the present examples we speak about reciprocating engines having a working volume 2, this term covers both cases.

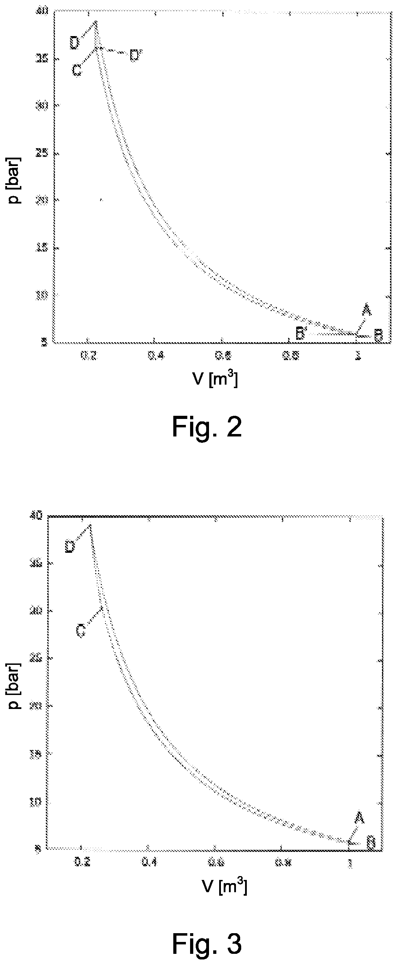

In step S2 in the beginning of an intake stroke when the piston 3 of the engine is at inside dead center the cylinder 1 is joined with the container 7 for working medium. In step S3 the piston is moved outside from the inside dead center, and thus the cylinder is loaded with working medium. At the end of this step the state of the working medium inside the cylinder is: volume 1 m³ pressure 6 bar temperature 300 K. This state is marked by point A in the pressure-volume diagram of Figure 2. The working medium comprises 0.4 mol water vapor. In step S4 in the beginning of the next - compression - stroke the cylinder 1 is closed, preferably with a valve 5 it is separated from the container 7 for working medium. In step S5 fine spray of water or dilute solution is introduced into the cylinder, due to its large total surface is evaporates rapidly and cools the working medium until the humidity in the cylinder 1 nears 100%. At that time the temperature of the gas mixture is 292 K, its water content is 1 mol, its pressure is 5.85 bar, this state is marked as point B in the pressure-volume diagram of Figure 2. We note that the temperature of point B can be varied between 274-330 K without a significant deterioration of the efficiency, during this variation the highest pressure of the cycle varies about 5%, the highest pressure varies 15%. Above this region the vapor content of the working medium increases significantly and the heat loss towards the environment also increases. In step S6 we compress and thus heat the working medium by moving the piston inward towards the inside dead center. The droplets of the fine spray continue evaporating in the warming working medium, thus slowing down the temperature increase. The variation of the state of the working medium during the compression stroke is represented by the line segment between points B and C in the pressure-volume diagram of Figure 2. The amount of the injected water or dilute solution - naturally occurring water always comprises some solutes and thus, strictly speaking, the tap water, the water of rivers and seas, etc. are dilute aqueous solutions - is chosen e.g., by experiment, simulation or calculations known to the experts in such a way that whereon the piston reaches the inside dead center the droplets have evaporated. In point C of the pressure-volume diagram of Figure 2 the volume of the working medium is 0.223 m³, its pressure is 36.2 bar, its temperature is 404 K (131 °C), its water vapor content is 18 mol. Then in step S7, fine spray of higher concentration solution is introduced into the cylinder 1, some of the vapor condensates onto the droplets and thus heats them, and the warm droplets heat the working medium. The state changes into state marked as point D of the pressure-volume diagram of Figure 2, the pressure is 38.95 bar, the temperature 434 K (161 °C), the water vapor content is 15.5 mol. This step is rather counter intuitive as one would expect a pressure drop due to vapor condensation. Although the partial pressure of water really decreases, the pressure of the inert gas heated by the condensation heat rises much more, and the net effect is a pressure increase. The working medium expands pushing the piston outwards, the state change during the expansion stroke is represented by the line segment between points D and A in the pressure-volume diagram of Figure 2. As the working medium cools more and more vapor condenses onto the droplets, thus slowing down the temperature decrease. At the outer dead center the state of the working medium returns to the state marked by point A in the pressure-volume diagram of Figure 2. In step S8 the working medium is pushed out of the cylinder 1 by the piston 3 through the valve 5, and after droplet separation, it is returned to the container 7 for working medium. To get a more clear-cut figure, the intake and exhaust strokes are not shown in the pressure-volume diagram.

With the cycle described above we get about 55 kJ work, which means that an energy conversion machine comprising four such cylinder 1s and operated at 1500 revolutions/minute, namely a 13 engine yields 5.5 MW power.

The pressure in the container 7 for working medium is proportional to the amount of gas flowing through the engine, and thus it has to be increased as much as possible. The pressure of the container 7 for working medium is limited by the compression ratio and the maximum allowable pressure - this is point D in the pressure-volume diagram of Figure 2 - inside the energy conversion machine. In the above examples the pressure of the container 7 for working medium varies between 0.5-16 bar. The pressure in the container 7 for working medium is constant in every example, but the constant is different in the different examples.

In the examples below, we allow about 40 bar maximum pressure inside the working volume 2, this value divided by the pressure ratio gives the pressure in the container 7 for working medium. If the walls of the working volume 2 can withstand 80 bar for example, the above values can of course be doubled.

A cycle analogous to the above-described cycle can of course be realized in turbines as well, or - using both sides of the piston 3 as a working volume - as a two-stroke engine. In a realistic cycle the corners marked with letters in the diagram are rounded.

As long as there are droplets of the dilute solution in the working volume 2, the state of the working medium varies along a curve uniquely determined by one of its points and the requirement that the partial pressure of the vapor inside the working volume 2 should be equal to the vapor pressure of the dilute solution. In what follows we will call that segment of the cycle, which lies on this curve the lower branch of the cycle. It was the line segment between points B and C above.

As long as there are droplets of the higher concentration solution in the working volume 2, the state of the working medium varies along a curve uniquely determined by one of its points and the requirement that the partial pressure of the vapor inside the working volume 2 should be equal to the vapor pressure of the higher concentration solution. In what follows we will call that segment of the cycle, which lies on this curve the upper branch of the cycle. It was the line segment between points D and A above.

Although in the above examples the A-B and C-D segments passing between the lower and upper branches correspond to isochoric (constant volume) processes, this is not necessary. In implementations using turbines, these segments could be isobaric (constant or nearly constant pressure) processes, namely, instead of vertical, horizontal line segments, such segments are shown as dotted lines between points A-B' and C-D' in Figure 2 for the present example. In this case, when the evaporation of the water droplets injected into the flow of the working medium starts to cool the working medium, instead of its pressure, its volume will decrease as long as the vapor became saturated, and the state of the system gets onto the lower branch at point B'. In case of turbomachinery the heating effect of the higher concentration solution injected after the compressor also manifests as an isobaric process. The volume increases as long as the state gets onto the upper branch at point D'. Other different variants of the segments passing between the lower and upper branches can also be implemented for example by varying the temporal characteristic of the injection or the intake geometry.

The compression ratio can also be varied in a wide range. Apart from the value in the above example we also performed simulations with a value of 1:1.82, which corresponds to a 2.4 pressure ratio. This very low value can be interesting because it can be achieved even with single stage centrifugal turbines. The efficiency is good here as well, but the work yield for a given mass flow in this region is proportional to the volume change, and thus - for the same initial pressure - it is lower here than in the example presented above. Using construction materials of similar strength though, for this lower compression ratio we can increase the pressure of the container 7 for working medium, in this example to 16 bar preferably this also increases the mass flow, and thus we can reach similar yields with simpler compressors. Apart from the value in the above example we also performed simulations with a compression ratio value of 1:33, this also proved to be operable, here the pressure in the container 7 for working medium is only 0.5 bar, and the pressure ratio is 70, which is impractical, and the power yield for a given mass flow is also smaller.

Modifying the example described above we can implement a significantly different segments passing between the lower and upper branches by using the adiabatic process in part of the compression: If we inject less dilute solution into the working volume in the compression stroke of step S4 than the maximum, which can be evaporated during the stroke, then the droplets will already be evaporated at partial compression. After that the further compression will cause an adiabatic process, which means a much faster heating than the compression accompanied with evaporation. The p-V diagram of such a cycle can be seen in figure 3. The segment between A and B, most of the compression segment and the segment between B and C is the same as those described earlier, with the exception that in step S5 instead of 17.6 mol only 15.3 mol water is injected into the working volume. The droplets are used up at point C of the curve at volume 0.26 m³, pressure 30.4 bar and temperature 121 °C, the state will get onto the upper branch of the cycle along the adiabatic compression process between points C and D. After point D the cycle continues according to the earlier descriptions. Thus, the condensation heating segment between points C and D of Figure 2 is replaced by the adiabatic compression between points C and D in Figure 3.

In a preferred embodiment the energy conversion and heat exchanger function are combined in one place in a cylinder 1. In step S2 at the first stroke of operation moving the piston 3 we charge the cylinder 1 with working medium, preferably inert gas devoid of oxygen, for example Nitrogen or Argon. By using an inert gas, we can significantly lower the corrosion of the components. The intake stroke is followed by the closing of the intake of the cylinder 1 in step S3, and in step S4 the compression stroke. Either during the intake stroke, in the intake duct or inside the cylinder 1, or during part of the compression stroke in step S5 we spray pure water into the working medium. It is well-known to the experts that spraying is a suitable way to produce an interface of large total surface between liquid and gas, it is generally used for accelerating the vaporization of fuels. In case of injection during the intake stroke, it could be enough to spray bigger droplets, because the droplets spend a longer time inside, there is a larger likelihood that the droplets stick onto the walls; injecting during the compression stroke requires finer spray, but it can be controlled better, its realization is more difficult and more expensive. The small droplets evaporate during the compression stroke and extract heat from the working medium. The main part of the heat extracted from the working medium is turned into the latent heat of evaporation of water, and in this form, it remains inside the cylinder 1, which can be thermally insulated. At the end phase of compression, when the evaporation is virtually done, we farther compress the gas in a nearly adiabatic way. During the following work stroke, the working medium expands and pushes the piston 3, in step S7 a higher concentration solution having a low vapor pressure is injected into this humid expanding gas, for example calcium chloride solution of 40-60 mass% or saturated magnesium chloride solution. The higher concentration solution is continuously diluted during energy extraction, its concentration is 60% in the wholly charged system, while near depletion it is 40%. The vapor present in the cylinder 1 condensates on the droplets of the saline solution and heats them. The droplets transfer this heat through their huge total surface to the cooling working medium. During this process the working medium recovers the energy it has transferred to the vapor during the compression stroke, plus the difference between the condensation heat of the warmer vapor to the saline solution and the evaporation heat of pure water. For the calcium chloride solution according to the example this is approximately 10%. This excess energy is the energy stored in the system as salinity difference, and what is converted into work. At the end of the work stroke the dry gas expands further, after which it returns to approximately the starting state. In step S8 in case of a piston engine by opening its exhaust, in case of a turbomachinery in a way usual to that the gas and saline solution is removed from the working volume, the liquid and gaseous components are separated by a known droplet separation method, the working medium gas is returned into the container 7 for working medium, the somewhat diluted solution is returned into the container 11 of the higher concentration solution, and the cycle can start over.

It can be seen that the thermodynamic efficiency of the cycle with respect to the working medium is only 10%, but the 90% is stored as evaporation heat during heat extraction and can be almost completely recovered during heat input as condensation heat. Loss can result from the effect that the tiny droplets of the atomized solution remain warmer than the working medium returned into the starting state. The magnitude of this effect depends on the size of the droplets, the mass ratio of gas and liquid, the flow conditions, but the heat lost this way is negligible compared to the total condensation heat. Similarly, in case of a large, thermally insulated cylinder 1, the number of the droplets touching and transferring heat to the wall is small and thus the heat lost there is also negligible, and the energy stored in the concentration difference is almost entirely turned into work with very high efficiency.

The reverse cycle can obviously be used for storing energy, with the exception that at the end of the compression stroke - which is now performed at higher temperature and the solvent is evaporated from the higher concentration solution - the humid gas has to be driven through a 20, droplet separator 21, before it can participate in the expansion stroke. At the end of the expansion stroke - which is now cooler, and the vapor is condensed onto the droplets of the dilute solution - the droplets are also separated from the gas preferably with droplet separators 20, 21. In this way most of the invested work is stored in the increasing concentration difference of the solutions. The energy, which can be stored using the solutions in the examples, is close to the 80-130 kJ/kg energy density of lead-acid batteries, but the storage capacity can be increased without limits by adding mora water and salt. The method is environment friendly; it uses only simple well-known and durable elements, and its energy density is several magnitudes higher than that of the most widespread pumped hydro plants.

In another preferred embodiment the heat exchange and work production are spatially separated. In this version the compressed humid working medium is at first loaded into the working volume 2, where higher concentration solution is sprayed into it, to heat the working medium by the warming droplets heated by the condensation heat of the vapor. The resulting higher temperature working medium extends into a turbine after droplet separation or gas-engine, where it produces work, after exiting the turbine or engine pure water is sprayed into the now colder and dry working medium to extract heat. During this phase the density and vapor content of the working medium increases. After further compression the humid working medium is returned to the beginning of the cycle.

The energy stored in the latent heat of vapor can be lost if the vapor condenses on the walls of the machine, for example on the walls of the cylinder 1, and the walls conduct and transfer that heat into the environment. To minimize this effect, in a preferred embodiment of the apparatus according to the invention those part of the apparatus, which can get in touch with the vapor are thermally insulated from the environment. This can be accomplished by using ceramic cylinder walls or by thermal insulation surrounding the cylinder 1, which, depending on the temperature, can be glass wool, rock wool, but since the temperature is low, it can even be a thermal insulation made of plastic materials.

In this way the walls equilibrate at a higher operational temperature, which on one hand reduces the condensation on the walls to a minimum, and on the other hand heats the working medium in its cold state. With a perfect insulation the equilibrium would form at the average temperature of the thermodynamic cycle, which in the above example is 85 °C. The temperature of the wall of course can vary significantly along the axis of the cylinder, at the inner parts it is warmer, but the principal goal of the thermal insulation is the reduction of heat loss.

In further preferred embodiment the dilute solution can be used for other purposes as well, it can even be a natural open body of water, for example the water of a pool, lake, river, quarry pond, oxbow lake, or sea, under the surface of which one or more flexible sack-like container or balloon encloses the higher concentration solution. This version is highly scalable, the storage capacity can be easily increased by adding new balloons (which can be of standardized size).

In further preferred embodiment the higher concentration solution is saturated at the storage temperature, and it comprises some undissolved solute material. For example, water can dissolve 35.2% magnesium chloride at 20 °C, while at 100 °C it can dissolve 42%, any excess over this remains undissolved. As during normal operation, we introduce solvent into the solution some of the excess salt dissolves to keep the concentration at the saturation level corresponding to that temperature. This means that the concentration of the solution remains constant within certain limits, while during the operation of the apparatus solvent is introduced into or removed from the solution. In the fully charged (by energy) state of the energy storage apparatus a significant portion of the solute material can be in an undissolved state.

In choosing the storage temperature we take into account that the saturation concentration increases with the temperature, thus the amount of dissolved salt and also the vapor pressure, both effects improve the energy density. On the other hand, the heat loss through the walls of the containers also increases, although this loss is insignificant for large, thermally insulated containers. To store the solutions under the temperature of the environment is impractical, while the upper temperature limit is given by the rationale that building the whole container pressure-tight would be also impractical, which means a practical limit of 100 °C or 90 °C for safety.

In the preferred embodiment shown in Figure 5 the tank 12 encloses three separate containers 10, 11, 24 for the dilute, higher, and medium concentration solutions. The duct 16 joins to the outlet of a three-port valve 25, one inlet of the three-port valve 25 is connected with the container 11, while its other inlet is connected with the container 24 in a way, which allows fluid transfer. Another port of the container 11 is connected with one outlet of another three-port valve 26, the inlet of the three-port valve 26 is connected to the duct 23, its other outlet is connected with the container 24 in a way, which allows fluid transfer.

During energy extraction the higher concentration solution is sent into the heat engine, where it is diluted to medium concentration, as in the process described earlier. In this case we use the three-port valve 25 to connect the duct 16 to the container 11. The produced medium concentration solution is not returned into the container 11 but into the container 24 established for this purpose. To this end we use the three-port valve 26 to connect the duct 23 to the container 24. The advantage of this configuration is that this way we can use a solution of constant concentration for heat input during the whole energy extraction phase. During energy storage we use up the solution from the container 24 for medium concentration solution, the water is evaporated from the medium concentration solution during the energy storage process, and the resulting higher concentration solution is accumulated in the container 11 of higher concentration solution. For this purpose, the three-port valves 25 and 26 are set to connect the duct 16 to the container 24 and the duct 23 to the container 11. The three containers 10, 11, 24 can be established inside a single tank 12 separated by flexible walls 13.

In further preferred embodiment at least one of the solutions are heated in a dedicated closed heat exchanger before it enters the energy conversion unit. The upper limit of the solution temperatures was set by the heat loss and pressure tightness of the containers, but it is not necessary to increase the temperature of the 10, 11, 24 containers, it is enough to heat the liquid currently in use, which required the above mentioned dedicated closed heat exchanger. The lower limit of the temperature is the temperature of the environment, the upper limit is the critical point of water, 374 °C. For practical purposes it is expedient to choose a temperature between 50-150 °C. The highest temperature occurring in the thermodynamic cycle should be kept below the critical point of water 647 K, practically significantly lower for example below 520 K that is below about 250 °C.

After use the solutions are cooled back to storage temperature. If the solution in question is the higher concentration solution, and the apparatus is used in energy extraction mode, than we can add more solute material to the heated solution just before its use, since at higher temperature the saturation concentration is higher.

By raising the temperature of the tank 12 or possibly one or more of the 10, 11 or 24 containers we can accomplish several different goals, on the one hand we can dissolve more solute materials in the higher concentration solution, which improves the energy storage capacity, on the other hand we can approximate the temperature of the solutions to the operation temperature of the heat engine. In the case of suitably large 10, 11, 24 containers the heat loss through the walls is small compared to the amount of the stored energy even with feasible thermal insulation; in a further preferred embodiment the heat lost this way is replenished by the mechanical losses of the heat engine.

According to a further advantageous implementation method the location of energy storage and extraction can be spatially separated. This way the solutions of different concentration can be used as fuels to provide energy for mobile devices. Refueling can be performed by quickly loading fresh solutions and venting the spent medium concentration solution. Changing the solutions can be performed in a few minutes at the fueling station, later the fueling station restore the concentration difference using some energy. Since the energy density of energy storage based on concentration differences is lower than conventional fuels, this implementation can be used, where the increased mass compared to conventional fuels is not a problem.

It is advantageous to configure the system in such a way that during operation the pressure of the gas in the container 7 for working medium does not change significantly. One way to accomplish this is choosing the volume of the container 7 for working medium to be significantly larger than that of the cylinder 1. It is more practical however to configure the heat engine in such a way that the difference of the amount of gas drawn from the container 7 for working medium and the amount vented into it at the same time is always close to zero. In case of a four-stroke configuration the intake stroke of a cylinder 1 always coincide with the exhaust stroke of another cylinder 1 if the number of cylinders is four or its integer multiple, which means that the same amount taken in by one cylinder 1 is at the same time exhausted by the other. In case of a turbomachinery the intake and exhaust of the machine are also equal. This way the size of the container 7 for working medium can be minimized.

The low maximum temperature of the thermodynamic cycle (typically 100-200 °C) makes it possible to use light metals, composites or even plastics as construction material, insulator, and coating. The low pressure ratio allows the use of simple few stage compressors and turbines.

The thermodynamic cycle operated in reverse stores the work fed into it in the growth of concentration difference of the solutions. Such a process can be presented using Figure 2, although now the ground state corresponding to the gas state in the container 7 for working medium is marked by point B. We introduce higher concentration solution into the working medium drawn into the cylinder 1, the working medium has 0.4 mol/m³ vapor content, which start to condense on the droplets and heats the gas, this is shown by the segment between B and A on the diagram of Figure 2. We start to compress the working medium by moving the piston 3 inward. The droplets of the fine spray evaporate in the warming gas, thus slowing down the temperature increase. The change of the gas state during compression is shown by the line segment between A and D on the p-V diagram of Figure 2. During this process the droplets lose water, their concentration increases. After compression the droplets of higher concentration solution must be removed from the working medium, there are several ways to accomplish this, we will return to this subject later. Next, we cool the gas to the state marked by C by injecting dilute solution preferably water into it, this is shown by the segment between D and C on the diagram of Figure 2, and then varying the state along the line segment between C and B most of the vapor content of the cooling gas mixture is condensed onto the surface of the droplets. In the exhaust stroke the gas and the droplets are removed from the cylinder 1 through the droplet separator 20 and the liquid is returned to the container 10 of the dilute solution. In summary we extract water from the higher concentration solution by investing work, and thus we increase the concentration difference.

Separating the droplets at the end of line segment A-D is very simple with a turbomachinery implementation; the continuously flowing medium should be driven through a droplet separator between the compressor and turbine. In piston engines a possible way is for example that the piston pushes the mixture into a transitory high-pressure container through a droplet separator, from which droplet-free gas is loaded into the cylinder at the beginning of the expansion phase.

For the implementation of the working volume, we mentioned piston engines and turbomachinery, furthermore in piston based system it could be advisable to use separate cylinders 1 for the intake-compression and the expansion-exhaust strokes, because this way the higher concentration and dilute solutions work in separate cylinders 1 and traces of the solutions which can potentially remain in the cylinder 1 do not worsen the effect of each-other. This way the droplet separation can be realized very simply during the transfer of the working medium from one of the cylinders 1 to the other.

Among the main advantages of the method according to the invention chiefly for mass energy storage and the apparatus implementing the method we can emphasize that compared to existing solutions it is cheap environment friendly, scales well, it has high energy density, it is long lived, it uses simple proven technologies; its energy density is comparable to that of batteries, while it is more durable and cheaper than batteries.

The chief application of the proposed solution is to store the excess energy coming from renewable sources or cheaply producing baseload power plants during periods of low consumption, and to return this energy into the electrical grid during periods of high consumption. Another advantage is that due to its high energy density it can replace larger battery plants.

### List of reference signs

S1-S8 steps
1 cylinder
2 working volume
3 piston
4 piston rod
5 valve
6 valve
7 container
8 duct
9 duct
10 container
11 container
12 tank
13 wall
14 duct
15 injector
16 duct
17 injector
18 pump
19 pump
20 droplet separator
21 droplet separator
22 duct
23 duct
24 container
25 three-port valve
26 three-port valve

## Claims

1. A method for extracting energy in the form of concentration gradients and for storing energy in the form of concentration gradients, respectively, the method comprising
a process of extracting energy comprising the steps of feeding stored gaseous working medium into a working volume (2),
compressing the working medium in the working volume (2),
spraying a dilute solution into the working volume (2) before or during compression,
increasing the temperature of the working medium fed in the working volume (2) by compression, evaporating the dilute solution with the working medium of increased temperature,
removing heat from the working medium by the evaporating solution,
keeping the heat extracted from the working medium in the form of latent heat of the vapor in the working volume (2),
further increasing the temperature of the working medium until the partial pressure of the vapor in the working medium approaches the vapor pressure of a solution of higher concentration at a corresponding temperature,
spraying a solution of higher concentration of a vapor pressure of up to 60% of the vapor pressure of the dilute solution into the expanding working medium having a high vapor content, obtaining thereby an atomized solution,
condensing the vapor in the working volume (2) onto solution droplets of the atomized solution and thereby heating the solution droplets,
conveying the heat energy of the heated solution droplets to the working medium through contact surfaces of the solution and the working medium,
feeding the heat previously conveyed to the dilute solution vapor during the compression back into the working medium plus as much heat as the condensation heat of the warmer vapor to the solution of higher concentration exceeds the heat of evaporation of the dilute solution,
using the heat thus fed to perform work by the expansion of the working medium,
obtaining the work performed by the working medium,
removing the working medium and the solution from the working volume (2) after the gaseous working medium of low relative humidity got into a state close to its initial state,
separating the working medium and the solution and returning the working medium to a container (7) for working medium and returning the slightly diluted solution of higher concentration to one of a container (11) for the solution of higher concentrations and an additional container (24) for the solution of intermediate concentration.

2. The method according to claim 1, the method further comprising a process of storing energy which comprises the step of further concentrating the solution of higher concentration by removing water by applying work, thereby increasing the concentration difference, and further comprising spraying a solution of higher concentration into the working medium drawn into the working volume (2),
heating the gas by compression and/or condensation on droplets of the solution of higher concentration,
compressing the working medium,
slowing the temperature rise in the gas heated by compression by evaporating a solution of higher concentration in contact with the gas over a large area,
increasing the concentration of the solution of higher concentration by evaporation,
separating the solution thus obtained, which is more concentrated than the initial concentration, from the working medium and returning the solution to the container for solution of higher concentration (11),
cooling the working medium by expansion or by introducing a more dilute solution into the working volume (2),
spraying further dilute solution into the working volume (2),
the majority of the water vapor content of the gas mixture cooling during expansion is condensed onto the surface of the dilute solution,
removing the gas and dilute solution from the cylinder (1), separating the gas and dilute solution and returning the dilute solution to a container (10) for dilute solution.

3. The method according to claim 1 or 2, comprising using an oxygen-free inert gas as the working medium.

4. The method according to any one of claims 1 to 3, comprising using a salt solution as the solution of higher concentration and lower vapor pressure.

5. The method according to claim 4, **characterized in that** the saline solution is one of a calcium chloride solution of at least 40 mass% or a magnesium chloride solution of at least 30 mass%, or a mixture thereof.

6. The method according to any one of claims 1 to 5, comprising heating at least one of the solutions before introducing it into the working volume (2) and cooling the solution heated before being introduced into the working volume (2) to storage temperature after use.

7. The method according to claim 6, comprising, during energy production and before use, adding additional solute material to the solution of higher concentration that has been heated before its introduction into the working volume (2).

8. The method according to any one of claims 2 to 7, comprising increasing the temperature of the container (10) for dilute solution and the container (11) for solution of higher concentration relative to the ambient temperature.

9. The method according to any one of claims 1 to 8, comprising injecting a solution of higher concentration at the end of the compression stroke for rapidly heating the working medium.

10. The method according to any one of claims 1 to 8, comprising during the compression step injecting a lower amount of dilute solution into the working volume (2) than the maximum which can be evaporated, thus completely evaporating the solution droplets at partial compression, then for rapid heating of the working medium causing an adiabatic change of state by further compression.

11. Apparatus for performing the method for storing energy according to any one of claims 1 to 10, comprising
a container (7) for working medium,
a container (10) for dilute solution,
a container (11) for solution of higher concentration,
a heat engine comprising a working volume (2) for receiving working medium,
ducts (8, 9) for working medium connecting the container (7) with the working volume (2) via respective valves (5, 6),
ducts (14, 16) connecting the working volume (2) with the solution containers (10, 11) via respective injectors (15, 17),
a pump (18) inserted in the duct (14) carrying the dilute solution from the container (10) for dilute solution to the working volume (2) and a pump (19) inserted in the duct (16) carrying the solution of higher concentration from the container (11) for solution of higher concentration to the working volume (2),
a droplet separator (20) inserted in the duct (8) providing fluid communication between the working volume (2) and the container (7) for working medium, and a droplet separator (21) inserted in the duct (9) providing fluid communication between the working volume (2) and the container (7) for working medium, liquid outlets of said droplet separators (20, 21) are connected through respective ducts (22, 23) with the container (10) for dilute solution and the container (11) for solution of higher concentration, respectively,
the heat engine is in driving connection with a motor-generator converting electrical energy into mechanical motion and mechanical motion into electrical energy, respectively.

12. The apparatus according to claim 11, **characterized in that** the container (10) for dilute solution and the container (11) for solution of higher concentration are formed as a single tank (12) comprising a built-in wall (13) separating the more dilute solution and the solution of higher concentration.

13. The apparatus according to claim 12, **characterized in that** the wall (13) is formed as a flexible wall (13).

14. The apparatus according to claim 12, **characterized in that** the wall (13) is movably arranged inside the container (12).

15. The apparatus according to claim 11, **characterized in that** it comprises a further container (24) for the diluted solution of higher concentration.

16. The apparatus according to any one of claims 11 to 14, **characterized in that** the container (10) for dilute solution comprises a solution comprising at least 96 mass% of water.

17. The apparatus according to any one of claims 11 to 14, **characterized in that** the container (11) for solution of higher concentration comprises a solution comprising one of calcium chloride of at least 40 mass%, magnesium chloride of at least 30 mass%, or a mixture thereof.

18. The apparatus according to any one of claims 11 to 17, **characterized in that** the solution of higher concentration stored in the container (11) for solution of higher concentration is a saturated solution at storage temperature comprising solute material in undissolved state.

19. The apparatus according to one of Claims 11 to 18, **characterized in that** at least one of the container (7) for working medium, the container (10) for dilute solution, the container (11) for solution of higher concentration and the working volume (2) is made of thermal insulation material.

20. The apparatus according to one of Claims 11 to 18, **characterized in that** at least one of the container (7) for working medium, the container (10) for dilute solution, the container (11) for solution of higher concentration and the working volume (2) is provided with external thermal insulation.

21. The apparatus according to any one of claims 11 to 20, **characterized in that** the heat engine comprising the working volume (2) for receiving the working medium comprises a motor including a cylinder (1) receiving a movably guided piston (3).

22. The apparatus according to any one of claims 11 to 20, **characterized in that** the heat engine comprising the working volume (2) for receiving the working medium comprises a rotary turbine-compressor motor.

## Patentansprüche

1. Verfahren zur Gewinnung von Energie in Form von Konzentrationsgradienten bzw. zur Speicherung von Energie in Form von Konzentrationsgradienten, das Verfahren umfasst ein Prozess der Energiegewinnung umfassend folgende Schritte
Einspeisen von gespeichertem gasförmigem Arbeitsmedium in ein Arbeitsvolumen (2), Komprimieren des Arbeitsmediums in dem Arbeitsvolumen (2),
Einsprühen einer verdünnten Lösung in das Arbeitsvolumen (2) vor oder während der Kompression, Erhöhen der Temperatur des im Arbeitsvolumen (2) zugeführten Arbeitsmediums durch Kompression,
Verdampfen der verdünnten Lösung mit dem Arbeitsmedium erhöhter Temperatur,
Abführen von Wärme aus dem Arbeitsmedium durch die verdampfende Lösung,
Behalten der dem Arbeitsmedium entzogenen Wärme in Form latenter Wärme des Dampfes in dem Arbeitsvolumen (2),
weiteres Erhöhen der Temperatur des Arbeitsmediums, bis sich der Partialdruck des darin enthaltenen Dampfes dem Dampfdruck einer Lösung höherer Konzentration bei entsprechender Temperatur annähert,
Einsprühen einer Lösung höherer Konzentration mit einem Dampfdruck von bis zu 60 % des Dampfdrucks der verdünnten Lösung in das expandierende Arbeitsmedium mit hohem Dampfgehalt,
Kondensieren des Dampfes im Arbeitsvolumen (2) auf Lösungströpfchen der zerstäubten Lösung und dadurch Erhitzen der Lösungströpfchen,
Übertragen der Wärmeenergie der erhitzten Lösungströpfchen auf das Arbeitsmedium durch Kontaktflächen der Lösung und des Arbeitsmediums,
Zurückführen in das Arbeitsmedium der zuvor bei der Verdichtung an den verdünnten Lösungsdampf abgegebenen Wärme plus so viel Wärme, wie die Kondensationswärme des wärmeren Dampfes an die Lösung höherer Konzentration die Verdampfungswärme der verdünnten Lösung übersteigt,
Nutzen der so zugeführten Wärme zur Arbeitsleistung durch Ausdehnung des Arbeitsmediums,
Erhalten der vom Arbeitsmedium geleisteten Arbeit,
Entfernen des Arbeitsmediums und der Lösung aus dem Arbeitsvolumen (2), nachdem das gasförmige Arbeitsmedium niedriger relativer Luftfeuchtigkeit in einen Zustand nahe seinem Ausgangszustand gelangt ist,
Trennen des Arbeitsmediums und der Lösung und Rückführen des Arbeitsmediums in einen Behälter (7) für Arbeitsmedium, und Rückführen der leicht verdünnten Lösung höherer Konzentration in einen des Behälters (11) für die Lösung höherer Konzentration und eines zusätzlichen Behälters (24) für die Lösung mittlerer Konzentration.

2. Verfahren nach Anspruch 1, das Verfahren umfasst ein Prozess der Energiespeicherung umfassend einen Schritt des weiteren Konzentrierens der Lösung höherer Konzentration durch Entfernen von Wasser durch Aufbringen von Arbeit, wodurch der Konzentrationsunterschied erhöht wird, und umfasst weiterhin
Einsprühen einer Lösung höherer Konzentration in das in das Arbeitsvolumen (2) angesaugte Arbeitsmedium,
Erhitzen des Gases durch Kompression und/oder Kondensation an Lösungströpfchen höherer Konzentration,
Verdichten des Arbeitsmediums,
Verlangsamen des Temperaturanstiegs im durch die Verdichtung erhitzten Gas durch großflächiges Verdampfen einer Lösung höherer Konzentration im Kontakt mit dem Gas,
Erhöhung der Konzentration der Lösung höherer Konzentration durch Verdunstung,
Trennen der so erhaltenen Lösung, die höher konzentriert ist als die Ausgangskonzentration, vom Arbeitsmedium und Rückführen der Lösung in den Behälter (11) für Lösung höherer Konzentration,
Abkühlen des Arbeitsmediums durch Expansion oder durch Einbringen einer stärker verdünnten Lösung in das Arbeitsvolumen (2),
Einsprühen weiterer verdünnten Lösung in das Arbeitsvolumen (2), wobei der Großteil des Wasserdampfgehalts des beim Entspannen abkühlenden Gasgemisches an der Oberfläche der verdünnten Lösung kondensiert,
Entfernen des Gases und der verdünnten Lösung aus dem Zylinder (1), Trennen des Gases und der verdünnten Lösung und Zurückführen der verdünnten Lösung in einen Behälter (10) für verdünnte Lösung.

3. Verfahren nach Anspruch 1 oder 2, umfassend die Verwendung eines sauerstofffreien Inertgases als Arbeitsmedium.

4. Verfahren nach einem der Ansprüche 1 bis 3, umfassend die Verwendung einer Salzlösung als Lösung mit höherer Konzentration und niedrigerem Dampfdruck.

5. Verfahren nach Anspruch 4, **dadurch gekennzeichnet, dass** die Salzlösung eine Calciumchloridlösung mit einem Massenanteil von mindestens 40 % oder eine Magnesiumchloridlösung mit einem Massenanteil von mindestens 30 % oder eine Mischung davon ist.

6. Verfahren nach einem der Ansprüche 1 bis 5, umfassend das Erhitzen mindestens einer der Lösungen vor dem Einbringen in das Arbeitsvolumen (2) und das Abkühlen der vor dem Einbringen in das Arbeitsvolumen (2) erhitzten Lösung auf Lagertemperatur nach der Verwendung.

7. Verfahren nach Anspruch 6, umfassend während der Energieerzeugung und vor der Verwendung das Hinzufügen von zusätzlichem gelöstem Material zu der Lösung höherer Konzentration, die vor ihrer Einführung in das Arbeitsvolumen (2) erhitzt wurde.

8. Verfahren nach einem der Ansprüche 2 bis 7, umfassend das Erhöhen der Temperatur des Behälters (10) für verdünnte Lösung und des Behälters (11) für Lösung höherer Konzentration im Verhältnis zur Umgebungstemperatur.

9. Verfahren nach einem der Ansprüche 1 bis 8, umfassend das Einspritzen einer Lösung höherer Konzentration am Ende des Kompressionshubs zur schnellen Erwärmung des Arbeitsmediums.

10. Verfahren nach einem der Ansprüche 1 bis 8, umfassend während des Kompressionsschritts das Einspritzen einer geringeren Menge an verdünnter Lösung in das Arbeitsvolumen (2), als maximal verdampft werden kann, wodurch die Lösungströpfchen dann bei teilweiser Kompression zur schnellen Erwärmung des Arbeitsmediums vollständig verdampft werden, was durch weitere Kompression zu einer adiabatischen Zustandsänderung führt.

11. Vorrichtung zur Durchführung des Verfahrens zur Energiespeicherung nach einem der Ansprüche 1 bis 10, umfassend
einen Behälter (7) für Arbeitsmedium,
einen Behälter (10) für verdünnte Lösung,
einen Behälter (11) für Lösung höherer Konzentration,
eine Wärmekraftmaschine mit einem Arbeitsvolumen (2) zur Aufnahme von Arbeitsmedium,
Leitungen (8, 9) in Verbindung mit dem Arbeitsvolumen (2) und dem Behälter (7) für Arbeitsmedium,
Leitungen (14, 16) in Verbindung mit den Lösungsbehältern (10, 11) im Arbeitsvolumen (2),
wobei eine Pumpe (18) in die Leitung (14) eingesetzt ist, die die verdünnte Lösung aus dem Behälter (10) zum Arbeitsvolumen (2) fördert, und eine Pumpe (19) in die Leitung (16) eingesetzt ist, die die Lösung höherer Konzentration aus dem Behälter (11) für Lösung höherer Konzentration zum Arbeitsvolumen (2) fördert,
ein Tropfenabscheider (20) in die Leitung (8) eingefügt ist, der eine Fluidverbindung zwischen dem Arbeitsvolumen (2) und dem Behälter (7) für Arbeitsmedium herstellt, und ein Tropfenabscheider (21) in den Kanal (9) eingesetzt ist, der eine Fluidverbindung zwischen dem Arbeitsvolumen (2) und dem Behälter (7) für Arbeitsmedium herstellt, wobei Flüssigkeitsauslässe der Tropfenabscheider (20, 21) über jeweilige Leitungen (22, 23) mit dem Behälter (10) für verdünnte Lösung bzw. dem Behälter (11) für Lösung höherer Konzentration verbunden sind,
die Wärmekraftmaschine in Antriebsverbindung mit einem Motor-Generator steht, der elektrische Energie in mechanische Bewegung bzw. mechanische Bewegung in elektrische Energie umwandelt.

12. Vorrichtung nach Anspruch 11, **dadurch gekennzeichnet, dass** der Behälter (10) für verdünnte Lösung und der Behälter (11) für Lösung höherer Konzentration als ein einziger Tank (12) ausgebildet sind, der eine eingebaute Wand (13) aufweist, die die verdünnte Lösung und die Lösung höherer Konzentration voneinander trennt.

13. Vorrichtung nach Anspruch 12, **dadurch gekennzeichnet, dass** die Wand (13) als flexible Wand (13) ausgebildet ist.

14. Vorrichtung nach Anspruch 12, **dadurch gekennzeichnet, dass** die Wand (13) beweglich innerhalb des Behälters (12) angeordnet ist.

15. Vorrichtung nach Anspruch 11, **dadurch gekennzeichnet, dass** sie einen weiteren Behälter (24) für die verdünnte Lösung höherer Konzentration aufweist.

16. Vorrichtung nach einem der Ansprüche 11 bis 14, **dadurch gekennzeichnet, dass** der Behälter (10) für verdünnte Lösung eine Lösung enthält, die Wasser mit einem Massenanteil von mindestens 96 % enthält.

17. Vorrichtung nach einem der Ansprüche 11 bis 14, **dadurch gekennzeichnet, dass** der Behälter (11) für Lösung höherer Konzentration eine Lösung enthält, die Calciumchlorid mit einem Massenanteil von mindestens 40 % oder Magnesiumchlorid mit einem Massenanteil von mindestens 30 % oder deren Mischung enthält.

18. Vorrichtung nach einem der Ansprüche 11 bis 17, **dadurch gekennzeichnet, dass** die im Behälter (11) für die Lösung höherer Konzentration gelagerte Lösung höherer Konzentration eine bei Lagertemperatur gesättigte Lösung ist, die gelöstes Material in ungelöstem Zustand enthält.

19. Vorrichtung nach einem der Ansprüche 11 bis 18, **dadurch gekennzeichnet, dass** mindestens einer von dem Behälter (7) für Arbeitsmedium, dem Behälter (10) für verdünnte Lösung, dem Behälter (11) für Lösung höherer Konzentration und dem Arbeitsvolumen (2) aus wärmeisolierendem Material gefertigt ist.

20. Vorrichtung nach einem der Ansprüche 11 bis 18, **dadurch gekennzeichnet, dass** mindestens einer von dem Behälter (7) für Arbeitsmedium, dem Behälter (10) für verdünnte Lösung, dem Behälter (11) für Lösung höherer Konzentration und dem Arbeitsvolumen (2) mit einer äußeren Wärmedämmung versehen ist.

21. Vorrichtung nach einem der Ansprüche 11 bis 20, **dadurch gekennzeichnet, dass** die Wärmekraftmaschine mit dem Arbeitsvolumen (2) zur Aufnahme des Arbeitsmediums einen Motor mit einem Zylinder (1) umfasst, der einen beweglich geführten Kolben (3) aufnimmt.

22. Vorrichtung nach einem der Ansprüche 11 bis 20, **dadurch gekennzeichnet, dass** die Wärmekraftmaschine mit dem Arbeitsvolumen (2) zur Aufnahme des Arbeitsmediums einen Rotationsturbinen-Kompressormotor umfasst.

## Revendications

1. Procédé pour extraire de l'énergie sous forme de gradients de concentration et pour stocker de l'énergie sous forme de gradients de concentration, respectivement, le procédé comprend un processus de génération d'énergie comprenant les étapes suivantes
introduction d'un milieu de travail gazeux stocké dans un volume de travail (2),
comprimant le milieu de travail dans le volume de travail (2),
pulvérisant une solution diluée dans le volume de travail (2) avant ou pendant la compression, augmentant la température du milieu de travail amené dans le volume de travail (2) par compression,
évaporant la solution diluée avec le fluide de travail milieu de travail à température élevée, éliminant la chaleur du milieu de travail par la solution qui s'évapore,
évaporation de la solution diluée avec le milieu de travail à température élevée,
évacuant la chaleur du milieu de travail grâce à la solution d'évaporation,
conservant la chaleur extraite du milieu de travail sous forme de chaleur latente de la vapeur dans le volume de travail (2),
augmentant encore la température du milieu de travail jusqu'à ce que la pression partielle de la vapeur qu'il contient se rapproche de la pression de vapeur d'une solution de concentration plus élevée à une température correspondante,
pulvérisant une solution de concentration plus élevée avec une pression de vapeur allant jusqu'à 60 % de la pression de vapeur de la solution diluée dans le fluide de travail en expansion avec une teneur élevée en vapeur,
condensant la vapeur dans le volume de travail (2) sur des gouttelettes de solution de la solution atomisée et chauffant ainsi les gouttelettes de la solution,
transmettant l'énergie thermique des gouttelettes de solution chauffées au milieu de travail à travers les surfaces de contact de la solution et le fluide de travail,
réintroduction dans le milieu de travail de la chaleur précédemment dégagée par la vapeur de la solution diluée lors de la compression plus autant de chaleur que la chaleur de condensation de la vapeur plus chaude vers la solution de concentration plus élevée dépasse la chaleur de vaporisation de la solution diluée,
utilisant la chaleur ainsi fournie pour l'exécution du travail en dilatant le milieu de travail,
obtenant le travail effectué par le milieu de travail,
retirant le milieu de travail et la solution du volume de travail (2) après que le milieu de travail gazeux de faible humidité relative soit entré dans un état proche de son état initial,
séparant le milieu de travail et la solution et renvoyant le milieu de travail dans un récipient (7) pour milieu de travail, et renvoyant la solution légèrement diluée de concentration plus élevée dans l'un d'un récipient (11) pour la solution de concentrations plus élevées et d'un récipient supplémentaire (24) pour la solution de concentration intermédiaire.

2. Procédé selon la revendication 1, le procédé comprenant en outre un processus de stockage d'énergie qui comprend l'étape consistant à concentrant davantage la solution de concentration plus élevée en éliminant l'eau en appliquant un travail, augmentant ainsi la différence de concentration,
et comprenant en outre la pulvérisation d'une solution de concentration plus élevée dans le milieu de travail aspiré dans le volume de travail (2),
chauffant le gaz par compression et/ou condensation de gouttelettes de solution de concentration plus élevée,
comprimant le fluide de travail,
ralentir la montée en température du gaz chauffé par compression par évaporation d'une solution de concentration plus élevée au contact avec le gaz sur une grande surface,
augmentant la concentration de la solution de concentration plus élevée par évaporation,
séparant la solution ainsi obtenue, qui est plus concentrée que la concentration initiale, du milieu de travail et renvoyant la solution dans le récipient pour solution de concentration plus élevée concentration (11),
refroidant le fluide de travail par expansion ou en introduisant une solution plus diluée dans le volume de travail (2),
pulvérisation davantage de solution diluée dans le volume de travail (2), ce qui la majorité de la teneur en vapeur d'eau du mélange gazeux refroidissant pendant l'expansion, se condense sur la surface de la solution diluée,
éliminant le gaz et la solution diluée du cylindre (1), séparant le gaz et la solution diluée et renvoyant la solution diluée dans un récipient (10) pour la solution diluée.

3. Procédé selon la revendication 1 ou 2, comprenant l'utilisation d'un gaz inerte exempt d'oxygène comme milieu de travail.

4. Procédé selon l'une quelconque des revendications 1 à 3, comprenant l'utilisation d'une solution saline comme solution de concentration plus élevée et de pression de vapeur plus faible.

5. Procédé selon la revendication 4, **caractérisé en ce que** la solution saline est une solution de chlorure de calcium avec une fraction massique d'au moins 40 % ou une solution de chlorure de magnésium avec une fraction massique d'au moins 30 % ou un mélange de celles-ci.

6. Procédé selon l'une quelconque des revendications 1 à 5, comprenant le chauffage d'au moins une des solutions avant de l'introduire dans le volume de travail (2) et le refroidissement de la solution chauffée avant d'être introduite dans le volume de travail (2) à la température de stockage après utilisation.

7. Procédé selon la revendication 6, comprenant, pendant la production d'énergie et avant utilisation, l'ajout d'un soluté supplémentaire à la solution de concentration plus élevée qui a été chauffée avant son introduction dans le volume de travail (2).

8. Procédé selon l'une quelconque des revendications 2 à 7, comprenant l'augmentation de la température du récipient (10) pour solution diluée et du récipient (11) pour solution de concentration plus élevée par rapport à la température ambiante.

9. Procédé selon l'une quelconque des revendications 1 à 8, comprenant l'injection d'une solution de concentration plus élevée à la fin de la course de compression pour chauffer rapidement le fluide de travail.

10. Procédé selon l'une quelconque des revendications 1 à 8, comprenant lors de l'étape de compression l'injection dans le volume utile (2) d'une quantité de solution diluée inférieure au maximum évaporable, grâce à quoi les gouttelettes de solution sont ensuite complètement évaporées sous compression partielle pour chauffer rapidement le fluide de travail, provoquant un changement d'état adiabatique par compression supplémentaire.

11. Appareil pour mettre en oeuvre le procédé de stockage d'énergie selon l'une quelconque des revendications 1 à 10, comprenant
un récipient (7) pour le milieu de travail,
un récipient (10) pour solution diluée,
un récipient (11) pour solution de concentration plus élevée,
un moteur thermique avec un volume de travail (2) pour recevoir un fluide de travail,
conduites (8, 9) en communication avec le volume de travail (2) et le récipient (7) pour le fluide de travail,
conduites (14, 16) en communication avec les récipients de solution (10, 11) dans le volume de travail (2),
dans lequel une pompe (18) est insérée dans la conduite (14), qui transporte la solution diluée du récipient (10) vers le volume de travail (2),
et une pompe (19) est insérée dans la conduite (16), qui transporte la solution de concentration plus élevée du récipient (11) pour solution de concentration plus élevée vers le volume de travail (2),
dans lequel les conduites (8, 9) sont reliées au volume utile (2) par l'intermédiaire de vannes d'injection (15, 17),
un séparateur de gouttelettes (20) est inséré dans le conduit (8) assurant une communication fluidique entre le volume de travail (2) et le récipient (7) pour le milieu de travail, et un séparateur de gouttelettes (21) est inséré dans le conduit (9) assurant une communication fluidique entre le volume de travail (2) et le récipient (7) pour le milieu de travail,
dans lequel les sorties de liquide des séparateurs de gouttelettes (20, 21) sont reliées via des conduites respectives (22, 23) au récipient (10) pour solution diluée ou au récipient (11) pour solution de concentration plus élevée,
le moteur thermique est en liaison d'entraînement avec un moteur-générateur qui convertit l'énergie électrique en mouvement mécanique et le mouvement mécanique en énergie électrique, respectivement.

12. Appareil selon la revendication 11, **caractérisé en ce que** le récipient (10) pour solution diluée et le récipient (11) pour solution de concentration plus élevée sont formés sous la forme d'un réservoir unique (12) comprenant une paroi intégrée (13) séparant les plus solution diluée et la solution de concentration plus élevée.

13. Appareil selon la revendication 12, **caractérisé en ce que** la paroi (13) est réalisée sous forme de paroi flexible (13).

14. Appareil selon la revendication 12, **caractérisé en ce que** la paroi (13) est disposée de manière mobile à l'intérieur du conteneur (12).

15. Appareil selon la revendication 11, **caractérisé en ce qu'**il comprend un autre récipient (24) pour la solution diluée de concentration plus élevée.

16. Appareil selon l'une quelconque des revendications 11 à 14, **caractérisé en ce que** le récipient (10) pour solution diluée comprend une solution comprenant de l'eau dans une fraction massique d'au moins 96 %.

17. Appareil selon l'une quelconque des revendications 11 à 14, **caractérisé en ce que** le récipient (11) pour solution de concentration plus élevée comprend une solution qui contient du chlorure de calcium avec une fraction massique d'au moins 40 % ou du chlorure de magnésium avec une fraction massique d'au moins 30 % ou un mélange de ceux-ci.

18. Appareil selon l'une quelconque des revendications 11 à 17, **caractérisé en ce que** la solution à concentration plus élevée stockée dans le récipient (11) pour la solution à concentration plus élevée est une solution saturée à la température de stockage et contenant des matières dissoutes à l'état non dissous.

19. Appareil selon l'une des revendications 11 à 18, **caractérisé en ce qu'**au moins l'un parmi le récipient (7) pour milieu de travail, le récipient (10) pour solution diluée, le récipient (11) pour solution de concentration plus élevée et le volume de travail (2) est constitué d'un matériau d'isolation thermique.

20. Appareil selon l'une des revendications 11 à 18, **caractérisé en ce qu'**au moins l'un parmi le récipient (7) pour milieu de travail, le récipient (10) pour solution diluée, le récipient (11) pour solution de concentration plus élevée et le volume de travail (2) est doté d'une isolation thermique extérieure.

21. Appareil selon l'une quelconque des revendications 11 à 20, **caractérisé en ce que** le moteur thermique comprenant le volume de travail (2) pour recevoir le fluide de travail comprend un moteur comprenant un cylindre (1) recevant un piston guidé mobile (3).

22. Appareil selon l'une quelconque des revendications 11 à 20, **caractérisé en ce que** le moteur thermique doté du volume de travail (2) destiné à recevoir le fluide de travail comprend un moteur de compresseur à turbine rotative.
